# FASCICULE DE BREVET EUROPEEN

(11) **EP 0 874 190 B1**
(45) Date de publication et mention de la délivrance du brevet: **31.12.2008**
(21) Numéro de dépôt: 98201143.9
(22) Date de dépôt: 09.04.1998
(51) Int. Cl.: F21V 8/00, F21V 29/00

(54) **Générateur de lumière pour fibres optiques**
Lichtgenerator für optische Fasern
Light generator for optical fibers

(30) Priorité: 22.04.1997 FR 9704940
(43) Date de publication de la demande: 28.10.1998
(73) Titulaire: Koninklijke Philips Electronics N.V., 5621 BA Eindhoven (NL)
(72) Inventeur: Dabert, Eric, Société Civile S.P.I.D., 75008 Paris (FR); Dufresne, Pierre, Société Civile S.P.I.D., 75008 Paris (FR)
(74) Mandataire: van Oudheusden-Perset, Laure E.

(56) Documents cités:
- US-A- 5 021 932
- US-A- 5 099 399
- PATENT ABSTRACTS OF JAPAN vol. 12, no. 322 (E-652), 31 août 1988 & JP 63 086515 A (NEC), 16 avril 1988,

## Description

La présente invention concerne un générateur de lumière pour fibre optique, destiné à recevoir une lampe et un embout de fibre optique et muni d'un boîtier, d'un circuit d'alimentation électrique et de commande de la lampe, et d'un ventilateur de refroidissement comprenant une hélice entraînée par un moteur.

Un générateur de lumière pour fibres optiques selon le préambule ci-dessus est connu du document US 5,099,399. Ce document souligne que la température risque d'être très élevée au niveau de l'embout de fibre.

Un objet de l'invention est d'assurer une sécurité maximale du générateur, en ce qui concerne l'échauffement.

A cet effet, le générateur comporte un dispositif de détection de la rotation de l'hélice, couplé au circuit de commande de la lampe pour commander l'arrêt de cette dernière en cas de défaillance du ventilateur.

Avantageusement, le dispositif de commande de la lampe comprend un circuit de temporisation, qui inhibe le dispositif de détection de la rotation lors de la mise en route du générateur.

Ceci évite d'éteindre la lampe de façon injustifiée lors du démarrage du ventilateur.

Le dispositif de détection de la rotation comprend avantageusement un capteur de lumière qui reçoit de la lumière réfléchie par une pale de l'hélice.

Ainsi toutes les causes d'arrêt du ventilateur sont prises en compte ensemble.

Dans un mode de réalisation particulier, le capteur de lumière est un capteur infra-rouge, et l'hélice porte un élément réfléchissant pour de la lumière infra-rouge.

En outre, le générateur comporte avantageusement un dispositif de contrôle de la température d'un élément critique du générateur, couplé au circuit de commande de la lampe pour arrêter cette dernière en cas de température excessive.

Ainsi des causes de mauvais refroidissement autres que l'arrêt du ventilateur, par exemple l'encrassement de filtres à air, sont également prises en compte.

Le susdit élément critique est de préférence le support d'embout de fibre.

Dans un mode de réalisation particulier, le dispositif de contrôle de la température comprend une thermistance.

Le générateur comporte avantageusement, en plus, un dispositif de détection de l'allumage effectif de la lampe, avec un circuit de temporisation, pour donner un signal d'arrêt si la lampe ne s'allume pas au bout d'un temps prédéterminé après que le circuit d'alimentation électrique de la lampe ait commencé à fonctionner.

Ces aspects de l'invention ainsi que d'autres aspects plus détaillés apparaîtront plus clairement grâce à la description suivante d'un mode de réalisation constituant un exemple non limitatif.

La figure 1 représente schématiquement un générateur de lumière pour fibres optiques.

La figure 2 est un schéma d'un circuit d'alimentation électrique pour une lampe.

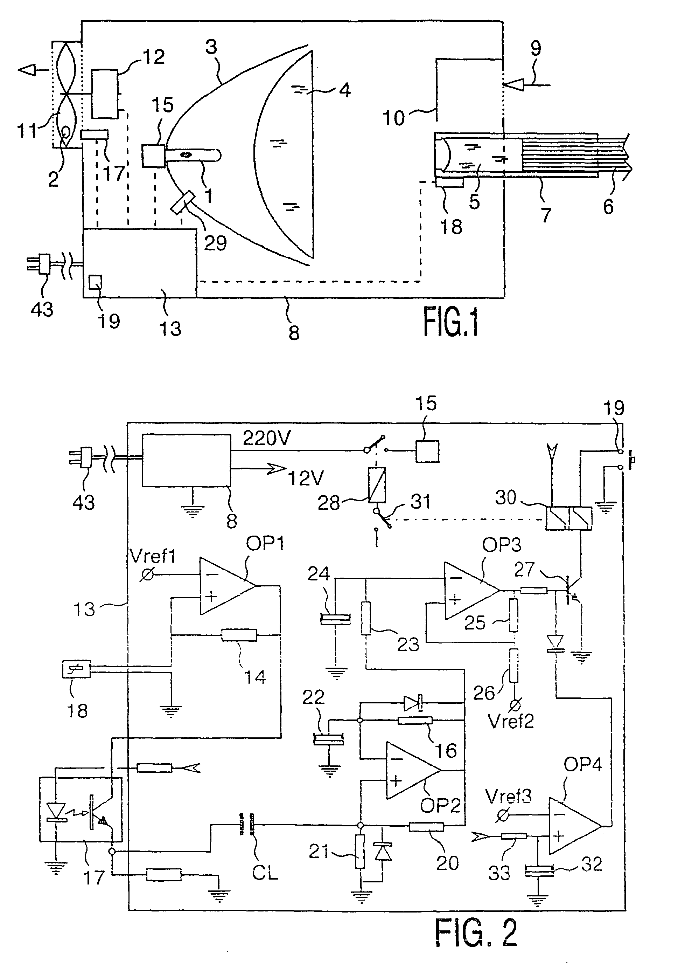

Le générateur de lumière représenté par la figure 1 introduit de la lumière dans un faisceau de fibres optiques figuré schématiquement en 6. Ce générateur comporte une lampe 1 maintenue par un support/connecteur 15, alimenté par un dispositif de commande 13, et une unité optique qui comprend ici un miroir parabolique 3 et une lentille 4. La lampe 1 est par exemple d'un type dit à iodures métalliques et à haute pression. Le support/connecteur 15 comprend (ou est associé à) une alimentation spécifique pour ce type de lampe.

L'extrémité du faisceau de fibres optiques 6 est maintenu dans un embout amovible 7, comportant une pièce cylindrique qui d'une part serre l'extrémité du faisceau de fibres optiques 6 et la maintient en place, et d'autre part enferme un élément optique 5 en verre, qui est appliqué contre l'extrémité du faisceau 6 de fibres optiques.

Le générateur est contenu dans un boîtier 8 et il est muni d'un système de refroidissement à air pulsé qui extrait l'air du boîtier au moyen d'une hélice 11, entraînée par un moteur 12. L'air entre dans le boîtier par une entrée 9 et est guidé par une gaine 10 qui l'oblige à lécher d'abord l'embout 7 du faisceau de fibres optiques.

Un dispositif de contrôle de la rotation de l'hélice 11 est constitué par un capteur 17, qui comprend un émetteur de lumière, disposé de façon à éclairer l'hélice, et un récepteur de lumière pour recevoir la lumière réfléchie par les pales. Ces éléments sont électriquement reliés au dispositif d'alimentation et de commande 13. Au moins une des pales peut recevoir un élément réfléchissant 2 pour mieux réfléchir la lumière.

Un dispositif de contrôle de la température est constitué par un capteur 18, qui comprend un élément sensible à la température, électriquement relié au dispositif 13, et est placé près d'un élément critique du générateur, à savoir ici l'embout 7 de la fibre optique, à l'endroit où il reçoit de la lampe un faisceau de lumière concentré.

Un dispositif, connu en soi, pour détecter l'allumage effectif de la lampe, avec un circuit de temporisation pour donner un signal d'arrêt si la lampe ne s'allume pas au bout d'un temps prédéterminé après que le circuit d'alimentation électrique de la lampe ait commencé à fonctionner, est constitué par un capteur de lumière 29 placé de façon à recevoir de la lumière de la lampe.

Sur la figure 2, les mêmes éléments portent les mêmes références que sur la figure 1. Le dispositif d'alimentation et de commande comprend une alimentation 8 pouvant être reliée au secteur par une prise 43. Cette alimentation délivre entre autres une tension régulée de 12 volts, symbolisée par une flèche. Chaque flèche identique dans le schéma indique une connexion avec l'alimentation 12 volts. Diverses tensions de référence Vref1, Vref2, Vref3, inférieures à 12 volts, sont engendrées à partir de cette alimentation. Quatre amplificateurs opérationnels OP1, OP2, OP3, OP4, sont avantageusement groupés dans un seul boîtier non indiqué pour simplifier la figure. Par exemple il peut s'agir d'amplificateurs opérationnels du modèle connu "LM324". Différents éléments habituels, que l'homme du métier saura ajouter, n'ont pas été représentés pour simplifier la figure et la description : par exemple des diodes de protection en shunt sur des bobines, des capacités de stabilisation d'amplificateurs opérationnels, etc.

L'entrée "-" du premier amplificateur OP1 est reliée à la tension de référence Vref1. La sortie est reliée à la masse par une résistance 14 en série avec une résistance à coefficient de température négatif ou thermistance, contenue dans le capteur 18. Ces deux résistances constituent un pont, au point médian duquel est reliée l'entrée "+" de l'amplificateur.

L'émetteur de lumière du capteur 17 est une diode émettrice infra-rouge alimentée à partir de l'alimentation 12 volts via une résistance, et le récepteur de lumière est un photo-transistor sensible à la lumière infra-rouge. La sortie du premier amplificateur OP1 est reliée à la masse via le photo-transistor, en série avec une résistance. Le point commun de la résistance et du transistor est relié à l'entrée "+" du second amplificateur OP2, via une capacité CL. Cette capacité supprime la composante continue, faute de quoi on ne détecterait pas d'anomalie dans le cas ou l'hélice serait arrêtée avec le réflecteur 2 devant le capteur 17.

Le second amplificateur OP2 est monté en intégrateur, de façon connue, au moyen d'une résistance 16 rebouclée sur son entrée "-" et shuntée par une diode redresseuse, et d'un pont de résistances 20, 21 rebouclé sur son entrée "+", pont dans lequel la résistance 21 est shuntée par une diode. L'entrée "-" est reliée à la masse via une capacité 22. Cet ensemble délivre une tension en sortie quand un signal alternatif ou d'impulsions, généré dans le transistor du capteur 17 par la lumière réfléchie sur l'hélice, est présent à son entrée.

Si la température augmente, la résistance de la thermistance 18 diminue, la tension baisse sur l'entrée "+" de l'amplificateur OP1, et sa sortie tombe à zéro, ce qui entraîne que le transistor du capteur 17 n'est plus alimenté. Ainsi les fonctions de détection de température et de détection de rotation sont mises en série de façon à arrêter la lampe si l'un ou l'autre des défauts est présent.

L'amplificateur OP3 sert de comparateur. Un pont de résistances 25, 26, au point médian duquel est reliée l'entrée "+" de l'amplificateur, relie sa sortie à la tension de référence Vref2. Le signal issu de l'amplificateur OP2 est amené à l'entrée "-" de l'amplificateur OP3 via une résistance 23. L'entrée "-" est reliée à la masse via une capacité 24.

La sortie de l'amplificateur OP3 commande, via une résistance série, la base d'un transistor 27 au collecteur duquel est relié un relais 30 d'un type bi-stable : quand ce relais est actionné par le courant du transistor 27, il ferme le contact 31 et le maintient fermé, même si le courant du transistor 27 disparaît, jusqu'à ce qu'une pression sur le bouton de l'interrupteur 19 re-arme le relais 30. Le contact 31 alimente un relais 28 d'alimentation de la lampe, dont le contact de travail relie le support/connecteur/alimentation 15 au réseau 220 volts.

L' entrée "-" d'un quatrième amplificateur OP4 est reliée à la tension de référence Vref3. L'alimentation 12V est reliée à l'entrée "+" de l'amplificateur OP4 via une résistance 33, et l'entrée "+" est reliée à la masse via une capacité 32. La sortie est reliée à la base du transistor 27 via une diode de blocage. Lors de la mise en route de l'appareil, la tension de 12 volts qui alimente l'amplificateur s'établit rapidement ainsi que la référence Vref3, mais le réseau résistance 33/capacité 32, qui correspond à une constante de temps de l'ordre de plusieurs secondes, retarde la montée de la tension sur l'entrée "+". Avant que cette tension n'atteigne une valeur égale à Vref3, la sortie de l'amplificateur est à un niveau bas, ce qui bloque le transistor 27. Lorsque la sortie de l'amplificateur passe à un niveau haut, la diode de blocage empêche toute action sur le transistor 27.

## Revendications

1. Générateur de lumière pour fibre optique, destiné à recevoir une lampe et un embout de fibre optique et muni d'un boîtier, d'un circuit d'alimentation électrique et de commande de la lampe, et d'un ventilateur de refroidissement comprenant une hélice entraînée par un moteur, **caractérisé en ce qu'**il comporte un dispositif de détection de la rotation de l'hélice comportant un émetteur de lumière secondaire disposé de façon à illuminer une pale de l'hélice et un récepteur de la lumière pour recevoir la lumière réfléchie par la pale, ledit dispositif de détection étant par ailleurs couplé au circuit de commande de la lampe pour commander l'arrêt de cette dernière en cas de défaillance du ventilateur.

2. Générateur de lumière selon la revendication 1, **caractérisé en ce que** le dispositif de commande de la lampe comprend un circuit de temporisation, qui inhibe le dispositif de détection de la rotation lors de la mise en route du générateur.

3. Générateur de lumière selon la revendication 1, **caractérisé en ce que** le récepteur de lumière est un capteur infra-rouge.

4. Générateur de lumière selon la revendication 3, **caractérisé en ce que** l'hélice porte un élément réfléchissant pour de la lumière infra-rouge.

5. Générateur de lumière selon la revendication 1, **caractérisé en ce qu'**il comporte un dispositif de contrôle de la température d'un élément critique du générateur, couplé au circuit de commande de la lampe pour arrêter cette dernière en cas de température excessive.

6. Générateur de lumière selon la revendication 5, **caractérisé en ce que** le élément critique est l'embout de fibre.

7. Générateur de lumière selon la revendication 5, **caractérisé en ce que** le dispositif de contrôle de la température comprend une thermistance.

8. Générateur de lumière selon la revendication 1, **caractérisé en ce qu'**il comporte un dispositif de détection de l'allumage effectif de la lampe, avec un circuit de temporisation, pour donner un signal d'arrêt si la lampe ne s'allume pas au bout d'un temps prédéterminé après que le circuit d'alimentation électrique de la lampe ait commencé à fonctionner.

## Claims

1. A light generator for an optical fiber, designed for accommodating a lamp and an end of an optical fiber and provided with a housing, with an electrical supply and lamp control circuit, and with a cooling fan comprising a helical propeller that is driven by a motor, **characterized in that** it comprises a detection device for the rotation of the helical propeller comprising an emitter of secondary light arranged so as to illuminate a blade of the helical propeller and a light receiver for receiving the light reflected by said blade, which detection device is further coupled to the control circuit of the lamp in order to switch the latter off if the fan is found to fail.

2. A light generator as claimed in claim 1, **characterized in that** the control device of the lamp comprises a delay circuit which deactivates the rotation detection device during the start-up of the generator.

3. A light generator as claimed in claim 1, **characterized in that** the light receiver is an infrared sensor.

4. A light generator as claimed in claim 3, **characterized in that** the helical propeller carries a reflecting element for the infrared light.

5. A light generator as claimed in claim 1, **characterized in that** it comprises a detection device for the temperature of a critical element of the generator, which device is coupled to the control circuit of the lamp so as to switch the latter off in the case of an excessive temperature.

6. A light generator as claimed in claim 5, **characterized in that** the critical element is the end of the fiber.

7. A light generator as claimed in claim 5, **characterized in that** the detection device for the temperature comprises a thermistor.

8. A light generator as claimed in claim 1, **characterized in that** it comprises a device for detecting the effective lighting of the lamp, with a delay circuit, for giving a stop signal if the lamp has not ignited at the end of a given period of time after the moment the electrical supply circuit of the lamp has started functioning.

## Patentansprüche

1. Lichtgenerator für Glasfasern, bestimmt für den Erhalt einer Lampe und einer Glasfaserklemme, versehen mit einem Gehäuse, einem elektrischen Schaltkreis zum Steuern der Lampe und einem Kühlventilator, bestehend aus einem von einem Motor angetriebenen Propeller, **dadurch gekennzeichnet, dass** er eine Vorrichtung zur Erkennung der Drehung des Propellers enthält, versehen mit einem Sender von Sekundärlicht, angeordnet, um ein Blatt des Propellers zu beleuchten, und einen Lichtempfänger, um das von dem Blatt reflektierte Licht zu erhalten, wobei die besagte Erkennungsvorrichtung außerdem an den Steuerschaltkreis der Lampe gekoppelt ist, um diese bei einem Defekt des Ventilators auszuschalten.

2. Lichtgenerator nach Anspruch 1, **dadurch gekennzeichnet, dass** die Vorrichtung zum Steuern der Lampe einen Zeitschaltkreis enthält, der die Vorrichtung zur Erkennung der Drehung beim Einschalten des Generators unterdrückt.

3. Lichtgenerator nach Anspruch 1, **dadurch gekennzeichnet, dass** der Lichtempfänger ein Infrarotsensor ist.

4. Lichtgenerator nach Anspruch 3, **dadurch gekennzeichnet, dass** der Propeller mit einem reflektierenden Element für das Infrarotlicht versehen ist.

5. Lichtgenerator nach Anspruch 1, **dadurch gekennzeichnet, dass** er eine Vorrichtung zur Steuerung der Temperatur eines kritischen Elements des Generators enthält, an den Steuerschaltkreis der Lampe gekoppelt, um sie bei überhöhter Temperatur auszuschalten.

6. Lichtgenerator nach Anspruch 5, **dadurch gekennzeichnet, dass** das kritische Element die Faserklemme ist.

7. Lichtgenerator nach Anspruch 5, **dadurch gekennzeichnet, dass** die Vorrichtung zur Steuerung der Temperatur einen Thermistor enthält.

8. Lichtgenerator nach Anspruch 1, **dadurch gekennzeichnet, dass** er eine Vorrichtung zur Erkennung des effektiven Zündens der Lampe enthält, mit einen Zeitschaltkreis, um ein Unterbrechersignal auszulösen, wenn die Lampe nach einer vorbestimmten Zeit, nachdem der elektrische Schaltkreis der Lampe eingeschaltet wurde, nicht aufleuchtet.
